# EUROPÄISCHE PATENTSCHRIFT

(11) **EP 0 810 432 B1**
(45) Veröffentlichungstag und Bekanntmachung des Hinweises auf die Patenterteilung: **04.02.2004**
(21) Anmeldenummer: 97107395.2
(22) Anmeldetag: 05.05.1997
(51) Int. Cl.: G01N 27/416

(54) **Verfahren zur Herstellung einer Kombination eines Drucksensors und eines elektrochemischen Sensors**
Method for manufacturing a combined pressure and electrochemical sensor
Méthode pour la production d'un capteur combiné de pression et électrochimique

(30) Priorität: 31.05.1996 DE 19621996
(43) Veröffentlichungstag der Anmeldung: 03.12.1997
(73) Patentinhaber: SIEMENS AKTIENGESELLSCHAFT, 80333 München (DE)
(72) Erfinder: Abraham-Fuchs, Klaus, 91058 Erlangen (DE); Gumbrecht, Walter, Dr., 91074 Hrzogenaurach (DE); Hierold, Christofer, DR., 81739 München (DE); Scheiter, Thomas, Dr., 80469 München (DE)

(56) Entgegenhaltungen:
- EP-A- 0 299 778
- US-A- 4 739 380
- US-A- 5 376 255

## Beschreibung

Für Anwendungen in der Medizintechnik z. B. werden Sensoren benötigt, mit denen eine physikalische Größe gemessen und gleichzeitig chemische Bestimmungen (z. B. pO₂-, pCO₂-,pH-Wert, Elektrolytkonzentrationen) durchgeführt werden können. Der elektrochemische Sensor umfaßt z. B. einen ISFET (Ion-Selective Field Effect Transistor). Solche Sensoren sind z. B. beschrieben in der EP 0 465 708 (US 5,225,063), in der US 5,376,255 und in den Veröffentlichungen von W. Gumbrecht et al., Sensors and Actuators B, 18-19, 704 bis 708 (1994) und Sensors and Actuators B1, 477 bis 480 (1990). In der DE 44 41 908 ist die Herstellung von Dünnfilmdrucksensoren auf Silizium beschrieben, die im Rahmen einer Standard-CMOS-Prozeßtechnik erfolgen kann. Derartige in Oberflächenmikromechanik hergestellte Sensoren können mit weiteren Bauelementen monolithisch integriert und mit wenig Aufwand in einem Gehäuse montiert werden. Eine Kombination eines derartigen Sensors mit anderen Bauelementen, insbesondere mit elektrochemischen Sensoren ist durch sogenannte modulare Integration möglich, d. h. die Integration verschiedener Bauelemente auf verschiedenen Chips dadurch, daß die Bauelemente auf einem gemeinsamen Träger oder in einem gemeinsamen Gehäuse montiert werden.

Aufgabe der vorliegenden Erfindung ist es, ein einfach und kostengünstig durchführbares Verfahren zur Herstellung einer integrierten Kombination von physikalischem und elektrochemischem Sensor anzugeben.

Diese Aufgabe wird mit dem Verfahren mit den Merkmalen des Anspruches 1 gelöst. Weitere Ausgestaltungen ergeben sich aus den abhängigen Ansprüchen.

Das erfindungsgemäße Verfahren ermöglicht auf einfache Weise die monolithische Integration eines Drucksensors mit einem elektrochemischen Sensor, der z. B. als potentiometrischer Sensor, als amperometrischer Sensor oder als konduktometrischer Sensor elektrische Spannungen, Ströme oder Leitfähigkeiten in Flüssigkeiten mißt, die charakteristisch für die Konzentration eines chemischen Bestandteiles in der jeweiligen Flüssigkeit sind. Eine bevorzugte Ausführungsform eines potentiometrischen Sensors umfaßt einen ISFET. Weitere Bauelemente, z. B. Transistoren einer elektronischen Ansteuer- und Auswerteschaltung, können im Rahmen des erfindungsgemäßen Verfahrens ebenfalls monolithisch integriert hergestellt werden. Dieser Herstellungsprozeß umfaßt die von der Herstellung der einzelnen Bauelemente bekannten Verfahrensschritte, wie z. B. die Verwendung von Maskentechnik und die Durchführung von Aufdampfprozessen, Trockenätzprozessen, Naßätzprozessen und verschiedene Photolithographieschritte. Bei diesem Verfahren wird auf einem Substrat aus Halbleitermaterial, in das nach Bedarf auch weitere elektronische Bauelemente für eine elektronische Meß- oder Ansteuerschaltung integriert werden, ein für den elektrochemischen Sensor vorgesehener Bereich soweit vorbereitet, daß der das Substrat betreffende Teil des Sensors fertiggestellt ist. Bei der Herstellung eines potentiometrischen Sensors wird z. B. die Grundstruktur eines herkömmlichen ISFET mit Source- und Drain-Bereich einschließlich einer für eine Definition der Eigenschaften des Kanalbereichs (Schwellenspannung) vorgesehenen Oxidschicht und der die Struktur abdeckenden z. B. pH-sensitiven Schicht, z. B. einer Nitridschicht, hergestellt. Im Fall der Herstellung eines amperometrischen Sensors wird das Material des Substrates mit einer elektrisch isolierenden Schicht, z. B. SiO₂ oder vorzugsweise auch hier Si₃N₄, abgedeckt. Danach wird dieser vorbereitete Teil des elektrochemischen Sensors, speziell die Nitridschicht eines ISFET, durch eine Schutzschicht abgedeckt. Die Grundstruktur des Drucksensors einschließlich eines Hohlraumes unter einer als Membran vorgesehenen Schicht wird hergestellt und mit einer planarisierenden Schicht abgedeckt. Für die elektrische Verdrahtung werden Füllungen von Kontaktlöchern in Dielektrikum (Zwischenoxid) ggf. mehrlagig hergestellt und darauf Metallisierungen aufgebracht und als Leiterbahnebenen strukturiert (gleichzeitig auch für die vorgesehenen integrierten elektronischen Schaltungen). Es werden weitere Bestandteile des elektrochemischen Sensors hergestellt, wozu die Nitridschicht des ISFET bzw. die isolierende Schicht eines andersartigen elektrochemischen Sensors teilweise freigeätzt wird. In diese Verfahrensschritte eingeschlossen ist die Herstellung einer oder ― je nach dem vorgesehenen Typ des Sensors ― mehrerer Elektroden für elektrischen Anschluß. Eine Oxidschicht und darauf eine Nitridschicht werden ganzflächig aufgebracht und strukturiert. Der physikalische Sensor wird vorzugsweise vor dem naßchemischen Freiätzen des elektrochemischen Sensors oder nach dem Aufbringen der Oxid- und der Nitridschicht durch Trockenätzen nach außen freigelegt. Weitere Verfahrensschritte zur Fertigstellung des elektrochemischen Sensors schließen sich an. Auf diese Weise wird erreicht, daß der Drucksensor und der elektrochemische Sensor beide optimale Funktionseigenschaften (Empfindlichkeit, Meßbereich usw.) haben. Das gesamte Herstellungsverfahren ist kompatibel zum Standard-CMOS-Prozeß, wie er in der Lehrbuchliteratur zu VLSI beschrieben ist. Darin eingeschlossen ist auch der Standard-BiCMOS-Prozeß. Mit diesem Verfahren ist es daher möglich, auch elektronische Schaltungen zum Ansteuern der Sensoren und zum Auswerten der Meßergebnisse monolithisch zu integrieren. Bei dem Verfahren wird durch eine Schutzschicht auf der Grundstruktur des elektrochemischen Sensors die Herstellung des optimierten mikromechanischen Sensors ermöglicht, ohne daß diese Grundstruktur des elektrochemischen Sensors beschädigt wird. Die optimierte Ausführung des elektrochemischen Sensors wird in den vorangehenden und den sich anschließenden Verfahrensschritten hergestellt, ohne daß der durch die aufgebrachte Schichtstruktur geschützte physikalische Sensor beschädigt wird.

Es folgt eine genauere Beschreibung des Verfahrens anhand der Figuren 1 bis 10.
Figuren 1 und 2 zeigen im Querschnitt die Struktur von Zwischenprodukten einer monolithischen Integration eines potentiometrischen Sensors mit ISFET und eines Drucksensors nach verschiedenen Verfahrensschritten.
Figur 3 zeigt die in Figur 2 dargestellte Struktur für eine Variante des Verfahrens.
Figuren 4 und 5 zeigen die Strukturen von Zwischenprodukten nach dem Aufbringen der Edelmetallelektrode und einer zweilagigen Schutzschicht für verschiedene Ausführungsbeispiele.
Figuren 6 und 7 zeigen das Ergebnis des erfindungsgemäßen Verfahrens am Beispiel eines potentiometrischen Sensors für verschiedene Ausführungsbeispiele.
Figuren 8 und 9 zeigen das Ergebnis des erfindungsgemäßen Verfahrens an Beispielen mit potentiometrischem Bezugssensor.
Figur 10 zeigt das Ergebnis des erfindungsgemäßen Verfahrens am Beispiel eines amperometrischen Sensors.
Einen Schnitt andeutende Schraffuren wurden in den Zeichnungen der Übersichtlichkeit halber weggelassen, ebenso die hinter der Zeichenebene liegenden Teile der dargestellten Bauelemente.

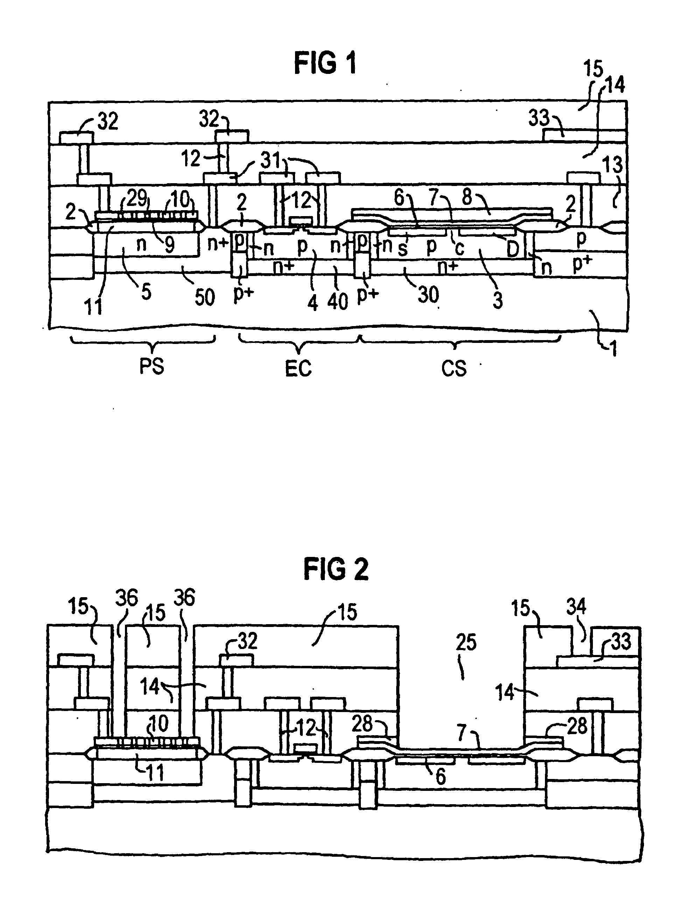

In Figur 1 sind ein Substrat 1 (z. B. Silizium) und verschiedene darin ausgebildete dotierte Bereiche dargestellt. Ein z. B. hoch n-leitend dotierter Bereich 30 und ein darin eingebetteter p-leitend dotierter Bereich 3 sind für den ISFET eines in diesem Ausführungsbeispiel vorgesehenen potentiometrischen Sensors CS ausgebildet. Ein n-leitend oder (hier als Beispiel) p-leitend dotierter Bereich 4 innerhalb eines entgegengesetzt dotierten Bereiches 40 ist als Wanne für die Herstellung eines MOSFET als Komponente einer elektronischen Schaltung EC vorgesehen. Der z. B. n-leitend dotierte Bereich 5 ist als Substrat-Elektrode für den Drucksensor vorgesehen. Dieser Bereich 5 ist in einen hoch für denselben Leitfähigkeitstyp (hier: n-leitend) dotierten Bereich 50, auf dem auch ein Kontakt (vertikale elektrisch leitende Verbindung 12) aufgebracht ist, eingebettet. Die für die verschiedenen Bauelemente vorgesehenen dotierten Bereiche 30, 40, 50 sind voneinander durch Bereiche entgegengesetzter Leitfähigkeit getrennt. Die jeweils untersten, hoch dotierten Anteile dieser Bereiche können weggelassen werden. Das Substrat 1 ist z. B. Silizium, das an der Oberfläche bereichsweise z. B. mittels LOCOS zu isolierenden Bereichen 2 oxidiert wird. Diese Bereiche 2 isolieren die einzelnen integrierten Bauelemente ringsum und dienen vorzugsweise auch als später zu entfernende Opferschicht (sacrificial layer) im Bereich des Drucksensors. In dem p-dotierten Bereich 3 werden Source S und Drain D des ISFET durch eine n-Dotierung hergestellt. Es kann eine weitere Implantierung in den Kanalbereich vorgesehen werden, um dessen elektrische Eigenschaften, insbesondere die Schwellenspannung, einzustellen. Eine für die Anpassung der elektrischen Eigenschaften des Kanalbereichs C von ISFETs typische gesonderte thermische Oxidation oder statt dessen eine Abscheidung eines Oxides zur Herstellung einer Oxidschicht 6 auf dem Kanalbereich C sowie eine darauf folgende Abscheidung einer pH-sensitiven Schicht 7 (vorzugsweise eine Nitridschicht) erfolgt vor den für den physikalischen Sensor vorgesehenen Verfahrensschritten. Die Herstellung dieser pH-sensitiven Schicht 7 erfolgt wegen der an die Qualität dieser Schicht gestellten Anforderungen vorzugsweise so, daß mittels LPCVD (low pressure chemical vapor deposition) im Bereich des herzustellenden ISFET eine 10 nm bis 100 nm dicke Nitridschicht aufgebracht wird.

Nachfolgend wird diese Nitridschicht mit einer Schutzschicht bedeckt. Für diese Schutzschicht kann z. B. zunächst eine zusätzliche Oxidschicht 8 aufgebracht werden. Diese Oxidschicht ist z. B. eine 100 nm dicke TEOS-Schicht (Tetraethylorthosilikat). Die Nitridschicht 7 und diese Oxidschicht 8 werden im gleichen Verfahrensschritt mittels Phototechnik in den Bereichen außerhalb des ISFETs entfernt, wie das in Figur 1 gezeichnet ist. Es wird dann eine für den physikalischen Sensor vorgesehene, z. B. etwa 30 nm dicke TEOS-Schicht 9 aufgebracht. Falls diese TEOS-Schicht 9 als Schutzschicht für die Nitridschicht des ISFET ausreicht, kann die zuvor erwähnte zusätzliche Oxidschicht 8 weggelassen werden. Dann wird auf diese TEOS-Schicht 9 eine z. B. etwa 400 nm dicke Schicht aus amorphem Silizium oder Polysilizium als Sensorschicht 10 aufgebracht, die in diesem Beispiel n-leitend dotiert wird und die für die Membran des Drucksensors vorgesehen ist. Diese beiden Schichten 9, 10 werden entsprechend den vorgesehenen Abmessungen des Drucksensors zu der in Figur 1 eingezeichneten strukturierten Schicht geätzt, die nur im Bereich des Drucksensors PS vorhanden ist und dort auf einer selektiv zu dem Silizium ätzbaren Hilfsschicht, die als Opferschicht (sacrificial layer) dient, aufgebracht ist. Als diese Hilfsschicht wird am einfachsten ein durch thermische Oxidation der Substratoberfläche hergestellter flächiger isolierender Bereich 2 verwendet. Im Bereich des elektrochemischen Sensors CS kann die TEOS-Schicht 9, die im Vergleich sehr dünn und in der Figur dort nicht gesondert gezeichnet ist, vorerst erhalten bleiben.

Bei einer Ausführungsform erfolgt zunächst eine erste Abscheidung und Strukturierung von Polysilizium ("Poly 1") für die Gate-Elektroden der MOSFETs der Schaltung. Für die Herstellung der Membran des Drucksensors erfolgt nach dem Aufbringen der Oxidschicht 8 eine zweite Abscheidung und Strukturierung von Polysilizium ("Poly 2"). Statt dessen kann die Schutzschicht vor dem Aufbringen der Gate-Elektroden abgeschieden werden. Sie wird auch im Bereich der Schaltung EC entfernt, so daß die Gate-Elektroden auch zusammen mit der Membran des Drucksensors in demselben Verfahrensschritt aufgebracht und strukturiert werden können.

Nach dem Strukturieren wird die Schicht 9, 10 des Drucksensors PS zum Substrat hin in erforderlichem Umfang freigelegt. Dazu werden in der Sensorschicht 10 Ätzöffnungen 29 hergestellt, die anschließend dazu verwendet werden, um einen Hohlraum 11 zwischen dem Substrat 1 und der Sensorschicht 10 auszuätzten. Die Sensorschicht 10 wird zum Substrat hin durch diesen Hohlraum 11 soweit freigelegt, wie für die vorgesehene Größe und Beweglichkeit der Membran erforderlich ist. Danach werden die Ätzöffnungen 29 verschlossen, so daß der Hohlraum 11 nach außen abgedichtet ist. Das kann z. B. mit einer gesondert aufgebrachten Verschlußschicht geschehen. Es wird danach ganzflächig eine Planarisierungsschicht 13 aus einem Material aufgebracht, das z. B. thermisch verflossen werden kann. Als Material für diese Planarisierungsschicht 13 kommt z. B. Borphosphorsilikatglas (BPSG) in Frage, mit dem eine ausreichend ebene Oberfläche erreicht wird. Diese Planarisierungsschicht kann gleichzeitig als Verschlußschicht zum Verschließen der Ätzöffnungen in der Membran dienen, so daß eine gesonderte Verschlußschicht entfallen kann. Bei diesen Verfahrensschritten ist der ISFET durch die Schutzschicht 8 in dem für den elektrochemischen Sensor CS vorgesehenen Bereich geschützt.

Wegen der geforderten feinen Strukturen der weiteren integrierten Bauelemente (z. B. MOSFETs der Ansteuerschaltung) erfolgt ein Ätzen von Kontaktlöchern in der Planarisierungsschicht 13 mittels Trockenätzung. Diese Kontaktlöcher, die die vertikalen elektrisch leitenden Verbindungen 12 zu den zu kontaktierenden Komponenten der Bauelemente herstellen, werden mit Metall aufgefüllt; dann wird eine erste Metallisierungsebene aufgebracht und strukturiert, so daß sich Kontaktflächen und Leiterbahnen 31 ergeben. Die Kontakte für Source S und Drain D des ISFET werden ebenfalls als Kontaktlochfüllungen hergestellt, und zwar in einem Bereich (vor oder hinter der Zeichenebene der Figuren), der im nachfolgenden Teil des Herstellungsverfahrens von den aufzubringenden Dielektrikumschichten bedeckt bleibt. Ggf. wird dazu die Nitridschicht 7 über den Bereichen von Source und Drain stellenweise entfernt. Die Sensorschicht 10, die bei diesem Ausführungsbeispiel zumindest teilweise elektrisch leitend hergestellt wird, und der dotierte Bereich 5 werden beim Herstellen der Kontaktlochfüllungen ebenfalls mit einem elektrischen Anschluß versehen. Die isolierenden Bereiche 2 an der Oberseite des Substrates 1 dienen als elektrische Isolation zwischen diesem dotierten Bereich 5 und der Sensorschicht 10, so daß dieser dotierte Bereich 5 und die Membran als Elektroden für eine kapazitive Druckmessung wie bei dem Sensor der DE 44 41 908 verwendet werden können.

Ggf. können weitere ganzflächige Dielektrikumschichten 14 als Isolation zwischen verschiedenen Leiterbahnebenen aufgebracht werden (Zwischenoxid, IMOX). Weitere Metallisierungen werden aufgebracht und zu weiteren Kontaktflächen oder Leiterbahnen 32, 33 strukturiert. Weitere Verfahrensschritte für die Herstellung des elektrochemischen Sensors schließen sich vorzugsweise an die für die übrigen Bauelemente vorgesehenen planartechnischen (ganze Schichtebenen betreffenden und keine Strukturierungen, die mehrere Schichtebenen umfassen, erzeugenden) Prozeßschritte an. Es wird also vorzugsweise der Ablauf des Prozesses zunächst fortgesetzt bis zur vollständigen Herstellung der verschiedenen Metallisierungsebenen. Auf die Oberseite wird vorzugsweise eine Schutzschicht 15 aus Plasmaoxid ohne Nitrid abgeschieden.

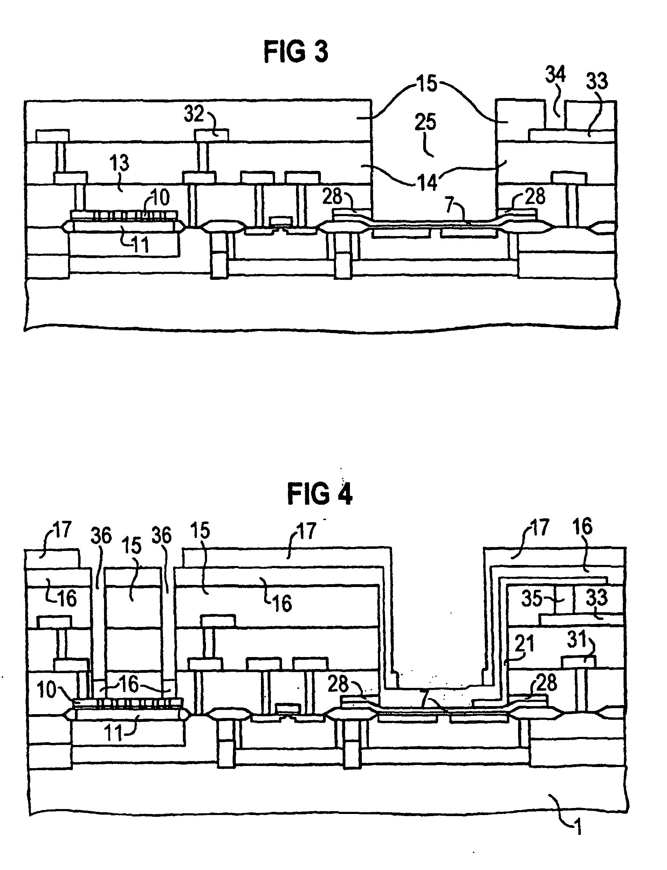

Bei einer ersten und bevorzugten Ausführungsform des Verfahrens erfolgt dann bereits das Freiätzen der Membran des Drucksensors und das Öffnen von Pads (Anschlußflecken, kleine freiliegende Anschlußbereiche auf der oberen Metallisierungsebene 32) in dieser oberen Schutzschicht 15 (s. Figur 2). Dazu ist ein Trockenätzprozeß besonders geeignet; naßchemisches Ätzen ist aber prinzipiell auch möglich. Falls ein Anschluß der nachfolgend herzustellenden Edelmetallelektrode des elektrochemischen Sensors über die Leiterbahnen an ein dafür vorgesehenes Pad der oberen Metallisierungsebene oder an Komponenten der integrierten Schaltung vorgesehen ist, wird in der oberen Schutzschicht 15 auch dafür ein Kontaktloch 34 hinab bis auf den darunter eingezeichneten Leiter 33 der oberen Metallisierungsebene geätzt. Wie in der Figur 2 dargestellt, kann über der Membran des Drucksensors in der Mitte die dielektrische Schichtstruktur 13, 14, 15 stehenbleiben, so daß eine Art Stempel die Trägheit und Flexibilität der Membran modifiziert. Die eingezeichnete Öffnung 36 bildet in Aufsicht einen (z. B. hohlquadratförmigen oder ringförmigen) geschlossenen Streifen und ist relativ zur Dicke der Schichten erheblich breiter, als in der nicht maßstäblichen Figur zum Ausdruck kommt. In einer anderen Variante des Verfahrens bleibt der Drucksensor zunächst noch von dem Dielektrikum bedeckt, wie in Figur 3 dargestellt ist. Ein Kontaktloch 34 für den Anschluß des Platinkontaktes wird dann vorzugsweise naßchemisch zusammen mit dem Freiätzen des elektrochemischen Sensors geätzt.

Die in den Figuren 2 und 3 eingezeichnete Öffnung 25 über dem Bereich des ISFET wird vorzugsweise naßchemisch geätzt, damit möglichst wenig von dem Nitrid der pH-sensitiven Schicht abgetragen wird. Von der in diesem Beispiel als erfindungswesentliche Schutzschicht verwendeten Oxidschicht 8 bleiben die restlichen Anteile 28 übrig. Die noch ausstehenden Verfahrensschritte zur Herstellung des elektrochemischen Sensors schließen sich an. Auf die obere Schutzschicht 15 wird eine dünne Schicht aus dem für den elektrochemischen Sensor vorgesehenen Edelmetall, beispielsweise Platin, abgeschieden und zu einem Kontakt, im folgenden einfach als Platinkontakt 21 (s. Figuren 4 bis 6) bezeichnet, strukturiert (z. B. mittels Abhebetechnik [lift off]). Wenn im folgenden der Einfachheit halber der Platinkontakt genannt ist, ist jeweils diese Edelmetallelektrode und deren Zuleitung gemeint, die im allgemeinen z. B. auch Silber sein können. Das Kontaktloch 34 kann zugleich mit dem Abscheiden des Platins gefüllt werden oder zuvor gesondert mit einem anderen Metall. Der Platinkontakt wird so aufgebracht und strukturiert, daß er mit der aus der Füllung des Kontaktloches 34 resultierenden leitenden Verbindung 35 zu dem Leiter 33 der obersten (unter der oberen Schutzschicht 15 aufgebrachten) Metallisierungsebene verbunden ist. Diese leitende Verbindung 35 kann weggelassen werden, wenn der Platinkontakt auf einem seitlich angeordneten größerflächigen Bereich (Pad) kontaktiert werden soll. Der Platinkontakt kann in einer weiteren Variante des Verfahrens bereits vor dem Ätzen der Öffnung 25 hergestellt werden. Er bedeckt dann nur einen Teil der Oberfläche der oberen Schutzschicht 15. Wenn die Öffnung vor der Herstellung des Platinkontaktes geätzt wird, kann der Platinkontakt so aufgebracht und strukturiert werden, daß ein wesentlicher Anteil der von dem Platinkontakt gebildeten Elektrode auf der Nitridschicht seitlich des Gate-Bereiches aufgebracht ist. Das ist in den Figuren schematisch so eingezeichnet, daß der Platinkontakt einen Teil des Drain-Bereiches bedeckt. Um ggf. parasitäre Kapazitäten zu vermeiden, kann es vorteilhaft sein, den Platinkontakt seitlich von Source, Kanal und Drain, z. B. hinter der Zeichenebene der Figuren hinter dem eingezeichneten Kanalbereich C aufzubringen.

Eine SiO₂-Schicht 16 und eine Si₃N₄-Schicht 17, die insbesondere als Schutzschichten für den Platinkontakt vorgesehen sind, werden z. B. mittels PECVD (plasma enhanced chemical vapor deposition) ganzflächig auf die Oberseite aufgebracht. Diese Nitridschicht 17 wird dann strukturiert und dient als Maske für weitere Verfahrensschritte. Dazu gehört die Entfernung der Oxidschicht 16 bis auf die jeweils erwünschten Anteile. In Figur 4 ist ein Ausführungsbeispiel dargestellt, bei dem eine Öffnung 36 des Drucksensors bereits geätzt ist und bei dem der Platinkontakt 21 bis auf den Boden der Öffnung 25 des elektrochemischen Sensors herab aufgebracht worden ist. Die Oxidschicht 16 wird z. B. 500 nm dick und die Nitridschicht 17 z. B. 800 nm dick abgeschieden. Die Nitridschicht 17 wird so strukturiert, daß sie Öffnungen aufweist in den Bereichen der Anschlußpads für externen elektrischen Anschluß, des freizulegenden Anteils des elektrochemischen Sensors und des wieder vom PECVD-Oxid zu befreienden Drucksensors. Das PECVD-Oxid bedeckt auch die Flanken der Dielektrikumschichten 13, 14, 15 in der Öffnung 36 und stellt auch dort einen Flankenschutz dar. Aus Platzmangel sind diese Anteile der Oxidschicht 16 nicht in den Figuren eingezeichnet.

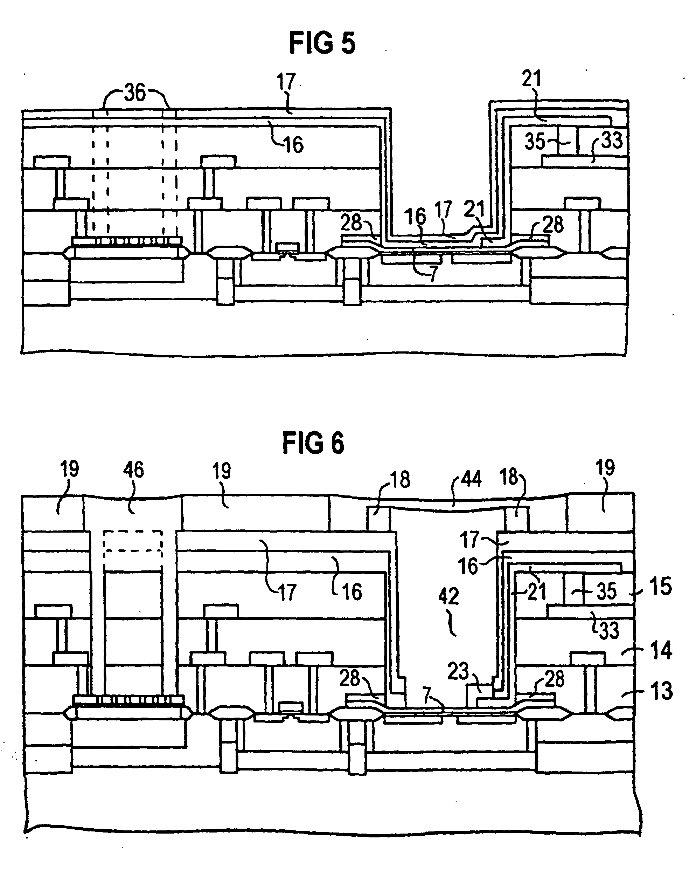

In Figur 5 ist im Gegensatz zu der Figur 4 die Variante mit erst nachträglichem Freiätzen des Drucksensors dargestellt. Nach dem Ätzen der Öffnung 25 für den elektrochemischen Sensor und dem Aufbringen des Platinkontaktes 21 werden die Oxidschicht 16 und die Nitridschicht 17 mittels PECVD abgeschieden. Die Nitridschicht 17 wird strukturiert. Unter Verwendung einer dafür aufgebrachten Lackmaske oder der strukturierten Nitridschicht 17 als Maske wird die (z. B. hohlzylinderförmige) Öffnung 36 über der Drucksensormembran, die in der Figur 6 gestrichelt angedeutet ist, geätzt. Das geschieht vorzugsweise mit einem Trockenätzverfahren. Danach wird die Nitridschicht 17 in den Bereichen der Anschlußpads für externen elektrischen Anschluß und des freizulegenden Anteils des elektrochemischen Sensors geätzt, was vorzugsweise naßchemisch geschieht. Bei diesem Ätzen wird der Drucksensor durch eine abdeckende Lackmaske geschützt. Als Schutzschicht über dem Platinkontakt kann auch eine einlagige Schicht vorgesehen werden, z. B. eine Oxidschicht wie SiO₂ oder TEOS. Das beschriebene Verfahren mit separater Oxidschicht 16 und Nitridschicht 17 hat aber den Vorteil, daß die Nitridschicht als Maske für nachfolgende Verfahrensschritte verwendet werden kann.

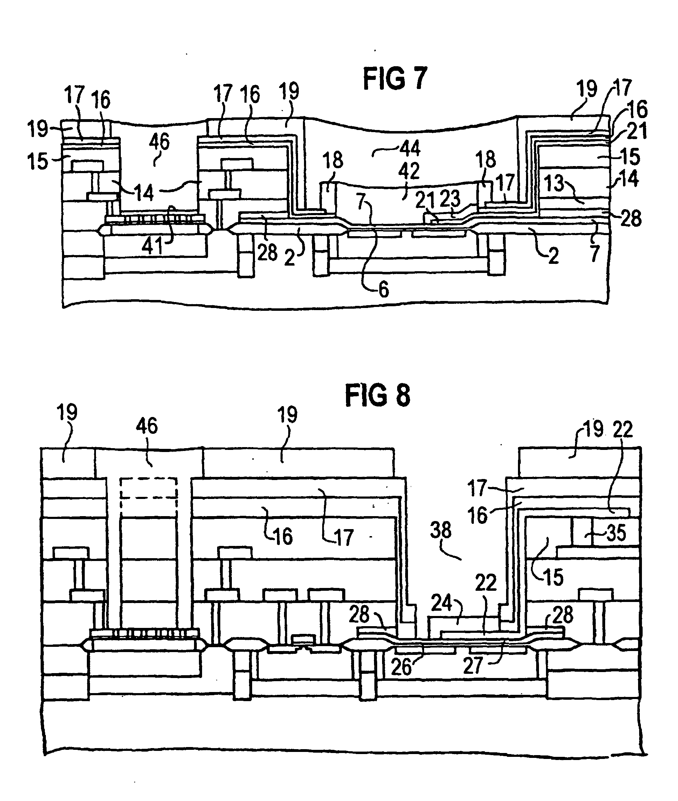

Nachdem die Membran des Drucksensors in dem vorgesehenen Umfang von dem darauf vorhandenen dielektrischen Material befreit worden ist und die Nitridschicht 17 vollständig strukturiert worden ist, werden eine erste Polymerschicht 18 und eine zweite Polymerschicht 19 aufgebracht (in beiden Fällen vorzugsweise Polyimid oder Polybenzoxazol) und für die Herstellung von Mikro-Pools geeignet strukturiert. Danach werden sämtliche Oxide naßchemisch geätzt, wobei die Nitridschicht 17 (und ggf. die erste Polymerschicht 18, wenn die Struktur der nachfolgend beschriebenen Figur 7 hergestellt wird) als Maske verwendet wird. Das Entfernen der PECVD-Oxidschicht 16 kann bei dafür geeigneter Strukturierung der Nitridschicht 17 im Bereich des Drucksensors so vorgenommen werden, daß ein Stempel aus Resten der Dielektrikumschichten in der Mitte der Membran in einer vorbestimmten Dicke stehenbleibt. Bei einer bevorzugten Ausgestaltung werden die Ätzöffnungen in der Sensorschicht 10 nur an den Stellen angebracht, an denen dieser Stempel stehenbleibt, so daß beim Entfernen der auf der Membran abgeschiedenen Anteile der Oxidschicht 16 alle Ätzöffnungen durch den dicken Stempel, der nur zu einem geringen Teil abgetragen wird, geschützt bleiben. (Die äußeren der in den Figuren 4 bis 6 nur schematisch eingezeichneten Ätzöffnungen würden also entfallen.)

Das naßchemische Ätzen (ohne Fototechnik) des Oxids im Bereich des elektrochemischen Sensors geschieht schonend, d. h. mit niedriger Ätzrate zumindest in der letzten Ätzphase, um das Nitrid der mittels LPCVD abgeschiedenen Nitridschicht 7 möglichst nicht abzutragen. Als Ätzstoppschicht dient dann diese Nitridschicht 7 bzw. der Platinkontakt 21. Auf einem freigelegten Teil des Platinkontaktes 21 wird Silber (z. B. galvanisch) abgeschieden. Auf diese nachträgliche Versilberung des Platinkontaktes kann verzichtet werden, wenn als Material für diese Edelmetallelektrode statt Platin Silber verwendet wurde. Dieses Silber wird chemisch oder elektrochemisch (z. B. in einem Chloridbad) teilweise in Silberchlorid überführt. Die Pads für externen Anschluß werden während dieser Verfahrensschritte mit Lackmasken geschützt. Bei der Herstellung eines konduktometrischen Sensors, der nur die Leitfähigkeit zwischen verschiedenen Elektroden mißt, kann auf den Ag/AgCl-Kontakt verzichtet werden. Es werden dann in die Öffnung 25 eine Elektrolytschicht 42, die von der Struktur der ersten Polymerschicht 18 eingefaßt wird, und darauf und seitlich dazu eine hydrophobe Schicht 44, die von der Struktur der zweiten Polymerschicht 19 eingefaßt wird, aufgebracht. Man erhält auf diese Weise die in Figur 6 dargestellte Struktur. Als Schutzschicht für den Drucksensor ist bei dem dort dargestellten Ausführungsbeispiel eine weitere Schicht 46 z. B. aus dem Material der hydrophoben Schicht 44 in die Öffnung über der Drucksensormembran eingebracht. Je nach Variante des Verfahrens (Freiätzen des Drucksensors nach dem Aufbringen der PECVD-Oxidschicht 16 und der PECVD-Nitridschicht 17 oder erneutes Abtragen von Oxid aus dem zuvor bereits befreiten Drucksensorbereich) ist der in Figur 6 gestrichelt eingezeichnete Schichtanteil über dem Drucksensor vorhanden oder nicht vorhanden.

In Figur 7 ist ein alternatives Ausführungsbeispiel dargestellt, bei dem die erste Polymerschicht 18 innerhalb der für den elektrochemischen Sensor geätzten Öffnung abgeschieden und strukturiert ist. Die Ränder der Nitridschicht 17 im Innern der für den Sensor vorgesehenen Öffnung befinden sich unterhalb der als Einfassung der Elektrolytschicht 42 vorgesehenen strukturierten ersten Polymerschicht 18. Diese Polymerschicht 18 dient auch als Maske für das Entfernen der Oxidschicht 16 im Bereich des elektrochemischen Sensors, so daß wie eingezeichnet die inneren Ränder der Oxidschicht 16 konform mit den inneren Flanken der strukturierten Polymerschicht 18 abschließen. Der Platinkontakt 21 ist im Inneren des von der ersten Polymerschicht 18 eingefaßten Bereiches aufgebracht und mit einer Zuleitung nach außen versehen. Diese Zuleitung ist zur hydrophoben Schicht 44 hin durch die Doppelschicht aus der Oxidschicht 16 und der Nitridschicht 17 geschützt. Die Zuleitung des Platinkontaktes 21 ist seitlich auf die Schichtfolge der Dielektrika 13, 14, 15 heraufgeführt. Unterhalb der Elektrolytschicht 42 ist der Platinkontakt 21 vollständig mit dem Ag/AgCl-Kontakt 23 bedeckt. Die Strukturierung der zweiten Polymerschicht 19 erfolgt wie eingezeichnet in der Weise, daß die zweite Polymerschicht 19 mindestens über der für den Drucksensor vorgesehenen Öffnung entfernt ist und daß die zweite Polymerschicht 19 einen ausreichenden Anteil außerhalb der durch die erste Polymerschicht 18 gebildeten Einfassung im Innern der für den elektrochemischen Sensor vorgesehenen Öffnung freiläßt. Die zweite Polymerschicht 19 wird wie eingezeichnet im Innern der für den elektrochemischen Sensor vorgesehenen Öffnung die Flanken der angrenzenden Schichten, d. h. hier insbesondere die dort vorhandene Oberfläche der Nitridschicht 17, ringsum bedecken.

In Figur 7 sind außerdem der Vollständigkeit halber weitere beschriebene Varianten des erfindungsgemäßen Verfahrens angedeutet. Die restlichen Anteile 28 der unteren Schutzschicht sind hier nicht auf den Bereich des elektrochemischen Sensors CS begrenzt dargestellt, lassen aber den Bereich des Drucksensors frei. Die Membran des Drucksensors ist hier als Beispiel in der gesamten für eine Messung vorgesehenen Fläche freigeätzt. Die eingezeichnete Verschlußschicht 41 kann ein unterster Schichtanteil der Planarisierungsschicht 13 sein, der beim Ätzen nicht mit weggenommen wird, oder eine gesondert aufgebrachte Schicht, die z. B. aus Metall sein kann und z. B. der Versteifung der Membran oder als Gegenelektrode dienen kann.

Zu dem elektrochemischen Sensor kann eine weitere Struktur hergestellt werden, die die gleiche Grundstruktur wie der Sensor aufweist, sich aber gegenüber der zu bestimmenden Konzentration des chemischen Stoffes neutral verhält. Bei einer Ausführungsform mit einem potentiometrischen Sensor mit ISFET kann ein für eine Vergleichsmessung (Differenzmessung) vorgesehener Bezugs-ISFET hergestellt werden. Für den Bezugs-ISFET wird eine gleichartige Grundstruktur wie für den für die direkte Messung vorgesehenen Sensor hergestellt. Diese Grundstruktur umfaßt gemäß der Darstellung in Figur 8 eine Oxidschicht 26 auf dem Kanalbereich und eine pH-sensitive Schicht, z. B. eine Nitridschicht 27. Mittels eines Ätzprozesses werden vor dem Herstellen des Platinkontaktes die Dielektrikumschichten 13, 14, 15 im Bereich des Bezugs-ISFETs bis auf die Nitridschicht 27 hinab entfernt, so daß die Öffnung 38 entsteht und die Nitridschicht zumindest teilweise freigelegt ist. Dieses Ätzen wird vorzugsweise zusammen mit dem naßchemischen Ätzschritt zum Herstellen der Öffnung 25 über dem eigentlichen Sensor ausgeführt, wobei auch gleichzeitig Kontaktlöcher (Kontaktloch 34 für den Anschluß des Platinkontakts an die oberste Metallisierungsebene, vgl. Figur 2 bzw. 3) in die obere Schutzschicht 15 geätzt werden können. In der Figur 8 sind verbleibende seitliche Reste 28 der unteren Schutzschicht 8 eingezeichnet. Zusammen mit der Herstellung des Platinkontaktes 21 für den eigentlichen Sensor wird im Bereich des Bezugs-ISFETs ein weiterer Platinkontakt 22 aufgebracht und auf die pH-sensitive Schicht (Nitridschicht 27), auf die Flanken der Öffnung 38 und auf einen Teil der angrenzenden Oberseite der Schutzschicht 15 so strukturiert, daß dieser weitere Platinkontakt 22 den Kanalbereich des ISFET überdeckt und über einen elektrischen Anschluß zu den für die Vergleichsmessung vorgesehenen Schaltungsteilen verfügt, z. B. in der dargestellten Weise über eine Kontaktlochfüllung 45 mit einem Leiter 43 der obersten Metallisierungsebene der elektronischen Schaltung. Anschließend werden auch hier wie zuvor beschrieben die SiO₂-Schicht 16 und die Si₃N₄-Schicht 17 mittels PECVD und die zweite Polymerschicht 19 aufgebracht und strukturiert. Sämtliches Oxid wird auch im Bereich des Bezugs-ISFETs naßchemisch geätzt, wobei auch hier eine für die Strukturierung der Nitridschicht 17 verwendete Lackmaske oder die Nitridschicht 17 als Maske fungiert. Auf die Platin-Metallisierung 22 wird eine Schicht aus Silber (z. B. galvanisch) abgeschieden, das chemisch oder elektrochemisch (z. B. in einem Chloridbad) teilweise in Silberchlorid überführt wird, so daß der Ag/AgCl-Kontakt 24 gebildet wird. Auf den Bezugs-ISFET brauchen keine Elektrolytschicht und keine hydrophobe Schicht aufgebracht zu werden. Die übrigen Verfahrensschritte entsprechen in ihrer Ausführung und Abfolge den oben für den elektrochemischen Sensor beschriebenen.

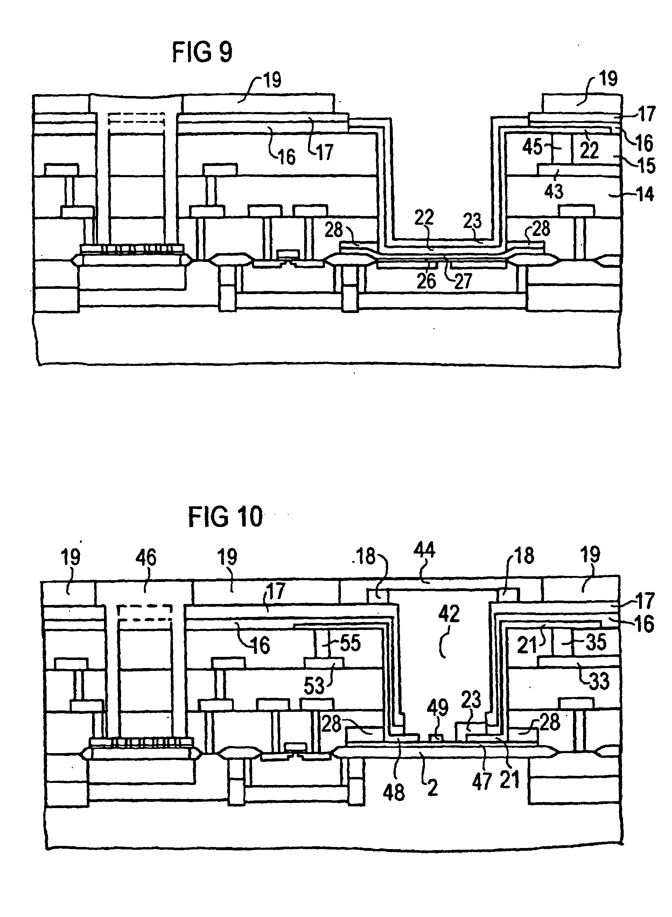

Figur 9 zeigt eine alternative Ausführungsform für die mit dem Bezugs-ISFET gebildete Struktur in Kombination mit Ausgestaltungen der gesamten Anordnung, wie sie in Figur 6 eingezeichnet sind. Der weitere Platinkontakt 22 ist hier ganzflächig auf der Nitridschicht 27 und auf den Flanken der Dielektrikumschichten 13, 14, 15 aufgebracht und ganzflächig mit dem Ag/AgCl-Kontakt 23 bedeckt. Diese Ausgestaltung ist unabhängig von den speziellen Ausgestaltungen der übrigen Komponenten der Anordnung, so daß diese ganzflächigen Kontakte auch bei der Variante des Drucksensors von Figur 7 vorgesehen werden können.

Ein MOSFET mit den gleichen lateralen Abmessungen und mit derselben Schichtstruktur (Oxidschicht und Nitridschicht im Gate-Bereich) wie der für den potentiometrischen Sensor verwendete ISFET wird mit denselben Verfahrensschritten, wie sie für den Bezugs-ISFET vorgesehen sind, hergestellt. Dabei entfällt das Aufbringen des Ag/AgCl-Kontaktes, und die Öffnung über diesem MOSFET wird mit der PECVD-Oxidschicht und der PECVD-Nitridschicht und ggf. auch mit der zweiten Polymerschicht 19 verschlossen. Dieser MOSFET wird als Bezugskomponente verwendet, um bei der Messung eine Vergleichsgröße zu haben, und ist Bestandteil der Auswerteschaltung.

Figur 10 zeigt zur Verdeutlichung, daß das erfindungsgemäße Verfahren nicht auf die Herstellung potentiometrischer elektrochemischer Sensoren mit ISFET beschränkt ist, eine Struktur entsprechend der Darstellung der Figur 6 für das Beispiel eines amperometrischen Sensors. Entsprechend der Beschreibung in der eingangs zitierten EP 0 465 708 A1 umfaßt der amperometrische Sensor mindestens eine Edelmetallelektrode als Gegenelektrode (counter electrode) zu einer Arbeitselektrode (working electrode) aus Edelmetall oder aus Kohlenstoff und ggf. eine weitere Edelmetallelektrode als Bezugselektrode (reference electrode). In dem Beispiel der Figur 10 kann ein Platinkontakt 21 mit dem darauf aufgebrachten Ag/AgCl-Kontakt 23 oder ein Silberkontakt als Bezugselektrode vorgesehen sein. Ein weiterer Platinkontakt 48, der vorzugsweise über eine Kontaktlochfüllung 55 mit einer Leiterbahn 53 der oberen Metallisierungsebene der CMOS-Verdrahtung elektrisch leitend verbunden ist, dient als Arbeitselektrode. Die Gegenelektrode ist durch einen dritten Platinkontakt 49 gebildet, der zwischen der Arbeitselektrode 48 und der Bezugselektrode 21/23 aufgebracht ist und im Bereich vor oder hinter der Zeichenebene in analoger Weise elektrisch angeschlossen wird. Die Grundstruktur eines ISFET entfällt hier. Vorzugsweise ist aber auch bei dem amperometrischen Sensor eine Nitridschicht 47 als Basis der Elektrodenanordnung vorhanden. Als Isolation gegen das Substrat 1 ist vorzugsweise ein durch thermische Oxidation (LOCOS) isolierend gemachter flächiger isolierender Bereich 2 im Bereich des amperometrischen Sensors vorhanden. Auf diesen isolierenden Bereich 2 kann die Nitridschicht 47 planar aufgebracht werden, was auch hier vorzugsweise, aber nicht notwendig mittels LPCVD geschieht. Für den amperometrischen Sensor können ebenfalls eine Elektrolytschicht 42 und eine hydrophobe Schicht 44 vorgesehen werden; oder die Edelmetallelektroden werden mit einer hydrophilen Membran abgedeckt wie in der EP 0 465 708 A1 beschrieben.

Im Fall eines konduktometrischen Sensors werden zwei Elektroden hergestellt, die dicht benachbart zueinander und mit möglichst großer einander zugewandter Fläche, z. B. kammartig verzahnt, angeordnet sind, um die Änderung der Leitfähigkeit eines umgebenden Mediums feststellen zu können. Eine Abdekkung der Elektroden kann wie im Fall des Drucksensors zum Schutz vorgenommen werden oder entfallen. Die Herstellung der Elektroden und des elektrischen Anschlusses erfolgt wie am Beispiel des amperometrischen Sensors beschrieben in dem grundsätzlich gleichen Verfahrensablauf.

Vorzugsweise wird das erfindungsgemäße Verfahren im Rahmen eines CMOS-Prozesses oder BiCMOS-Prozesses oder in Analogie zu einem CMOS-Prozeß oder BiCMOS-Prozeß durchgeführt. Es können die weiteren Bauelemente, die zusammen mit den Sensoren monolithisch integriert werden sollen und die die elektronische Schaltung zur Ansteuerung und zur Auswertung bilden, z. B. als MOSFETs im Rahmen dieses Prozesses hergestellt werden.

In den Figuren ist als Beispiel ein MOSFET als Komponente einer elektronischen Schaltung EC eingezeichnet, der in dem dotierten Bereich 4 hergestellt wird und durch die oxidierten Bereiche 2 von den übrigen Bauelementen elektrisch isoliert ist. Mit dem beschriebenen Verfahren ist daher eine sehr weitgehende Integration elektronischer Komponenten zu den Sensoren möglich.

## Patentansprüche

1. Verfahren zur Herstellung einer Kombination eines Drucksensors und eines elektrochemischen Sensors,
bei dem ein mikromechanischer Drucksensor und ein elektrochemischer Sensor auf einem Substrat integriert werden, mit den Schritten:
a) In einem Substrat (1) werden elektrisch leitende Bereiche (3, 5) ausgebildet;
b) es wird eine Grundstruktur für den elektrochemischen Sensor hergestellt, die mindestens eine elektrisch isolierende Schicht umfaßt;
c) diese Grundstruktur des elektrochemischen Sensors wird mit einer Schutzschicht bedeckt, die den für den Drucksensor vorgesehenen Bereich frei läßt;
d) eine Sensorschicht (10) für den Drucksensor wird abgeschieden und strukturiert und mit Ätzöffnungen (29) versehen;
e) zwischen der Sensorschicht und dem Substrat wird ein Hohlraum (11) ausgeätzt;
f) eine Planarisierungsschicht (13) aus einem dielektrischen Material wird ganzflächig aufgebracht;
g) elektrisch leitende Verbindungen zu Bereichen, die für elektrischen Anschluß vorgesehen sind, werden hergestellt;
h) ein für den elektrochemischen Sensor vorgesehener Bereich wird freigeätzt, und es wird mindestens eine Edelmetallelektrode (21) abgeschieden und strukturiert;
i) eine für die Edelmetallelektrode vorgesehene weitere Schutzschicht (16, 17) wird abgeschieden;
j) für die jeweilige Wirkungsweise der vorgesehenen Ausgestaltung des elektrochemischen Sensors erforderliche weitere Schichten werden aufgebracht und strukturiert;
entweder zwischen den Schritten g und h oder zwischen den Schritten i und j wird die Sensorschicht (10) des Drucksensors nach außen in dem für die vorgesehene Funktionsweise erforderlichen Umfang freigelegt.

2. Verfahren nach Anspruch 1,
bei dem die Sensorschicht des Drucksensors zwischen den Schritten g und h mit einem Trockenätzverfahren zumindest teilweise freigelegt wird.

3. Verfahren nach Anspruch 1,
bei dem die Sensorschicht des Drucksensors zwischen den Schritten i und j mit einem Trockenätzverfahren zumindest teilweise freigelegt wird.

4. Verfahren nach einem der Ansprüche 1 bis 3,
bei dem in Schritt b die elektrisch isolierende Schicht des elektrochemischen Sensors durch Aufbringen einer Nitridschicht (7, 27, 47) hergestellt wird und
bei dem in Schritt h der für den elektrochemischen Sensor vorgesehene Bereich freigeätzt und die Schutzschicht dort entfernt wird, indem ein naßchemischer Ätzprozeß durchgeführt wird.

5. Verfahren nach einem der Ansprüche 1 bis 4,
bei dem Schritt i durchgeführt wird, indem mittels plasma enhanced chemical vapor deposition eine Oxidschicht (16) und danach eine Nitridschicht (17) abgeschieden wird.

6. Verfahren nach einem der Ansprüche 1 bis 5,
bei dem Schritt h ausgeführt wird, indem zunächst ein für den elektrochemischen Sensor vorgesehener Bereich freigeätzt und die Schutzschicht dort entfernt wird und dann die Edelmetallelektrode hergestellt wird, indem eine Platinmetallisierung abgeschieden und so zu einem Platinkontakt (21) strukturiert wird, daß dieser Platinkontakt zumindest einen Anteil der isolierenden Schicht der Grundstruktur des elektrochemischen Sensors und einen Anteil der Flanken von seitlich des freigeätzten Bereiches angeordneten Schichten bedeckt.

7. Verfahren nach einem der Ansprüche 1 bis 6,
bei dem in Schritt b für den elektrochemischen Sensor eine Grundstruktur eines ISFETs hergestellt wird und die Edelmetallelektrode mit einem Silber-/Silberchloridkontakt (23) versehen wird.

8. Verfahren nach einem der Ansprüche 1 bis 7,
bei dem in Schritt c die Schutzschicht durch Aufbringen und teilweises Entfernen einer Oxidschicht (8) hergestellt wird.

9. Verfahren nach einem der Ansprüche 1 bis 8,
bei dem die Sensoren mit einer elektronischen Schaltung integriert werden,
bei dem in Schritt a mindestens ein Bauelement dieser Schaltung auf dem Substrat vorgesehen wird und
bei dem mindestens die Schritte a, f und g im Rahmen eines CMOS-Prozesses oder in Analogie zu einem CMOS-Prozeß durchgeführt werden.

10. Verfahren nach Anspruch 9,
bei dem Schritt g ausgeführt wird, indem in der Planarisierungsschicht (13) oder in der Planarisierungsschicht (13) und in weiteren darauf aufgebrachten Dielektrikumschichten (14, 15) Kontaktlöcher durch Trockenätzen hergestellt werden, Kontaktlochfüllungen für vertikale elektrisch leitende Verbindungen (12, 35, 45, 55) in diese Kontaktlöcher eingebracht werden und mindestens eine Metallisierungsebene für Leiterbahnen (31, 32, 33, 43, 53) aufgebracht und strukturiert wird.

11. Verfahren nach einem der Ansprüche 1 bis 10,
bei dem in den Schritten a und b eine Grundstruktur mit einem ISFET und eine weitere Grundstruktur mit einem ISFET, der als Bezugs-ISFET einer für Vergleichsmessung vorgesehenen weiteren Struktur vorgesehen ist, hergestellt werden,
bei dem in Schritt c auch der Bereich dieses Bezugs-ISFET mit der Schutzschicht bedeckt wird,
bei dem Schritt h ausgeführt wird, indem zunächst ein für den elektrochemischen Sensor vorgesehener Bereich und ein für die weitere Struktur vorgesehener Bereich freigeätzt werden und die Schutzschicht in beiden Bereichen entfernt wird und indem eine für die weitere Struktur vorgesehene Edelmetallelektrode hergestellt wird, indem eine Platinmetallisierung abgeschieden und so zu einem weiteren Platinkontakt (22) strukturiert wird, daß dieser weitere Platinkontakt zumindest den Kanalbereich des Bezugs-ISFETs und einen Anteil der Flanken von seitlich des freigeätzten Bereiches angeordneten Schichten bedeckt.

## Claims

1. Method for producing a combination comprising a pressure sensor and an electrochemical sensor,
in which a micromechanical pressure sensor and an electrochemical sensor are integrated on a substrate, having the following steps:
a) electrically conductive regions (3, 5) are formed in a substrate (1);
b) a basic structure is produced for the electrochemical sensor, the said basic structure comprising at least one electrically insulating layer;
c) the said basic structure of the electrochemical sensor is covered with a protective layer which leaves free the region provided for the pressure sensor;
d) a sensor layer (10) for the pressure sensor is deposited and patterned and provided with etching openings (29);
e) a cavity (11) is etched out between the sensor layer and the substrate;
f) a planarization layer (13) made of a dielectric material is applied over the whole area;
g) electrically conductive connections to regions which are provided for electrical connection are produced;
h) a region provided for the electrochemical sensor is etched free, and at least one noble metal electrode (21) is deposited and patterned;
i) a further protective layer (16, 17) provided for the noble metal electrode is deposited;
j) further layers required for the respective method of operation of the envisaged configuration of the electrochemical sensor are applied and patterned;
either between steps g and h or between steps i and j, the sensor layer (10) of the pressure sensor is uncovered towards the outside to the extent required for the envisaged functioning.

2. Method according to Claim 1,
in which the sensor layer of the pressure sensor is at least partially uncovered by means of a dry etching method between steps g and h.

3. Method according to Claim 1,
in which the sensor layer of the pressure sensor is at least partially uncovered by means of a dry etching method between steps i and j.

4. Method according to one of Claims 1 to 3,
in which, in step b, the electrically insulating layer of the electrochemical sensor is produced by application of a nitride layer (7, 27, 47), and
in which, in step h, the region provided for the electrochemical sensor is etched free and the protective layer is removed there by carrying out a wet-chemical etching process.

5. Method according to one of Claims 1 to 4,
in which step i is carried out by depositing an oxide layer (16) and then a nitride layer (17) by means of plasma enhanced chemical vapour deposition.

6. Method according to one of Claims 1 to 5,
in which step h is performed by firstly a region provided for the electrochemical sensor being etched free and the protective layer being removed there and then the noble metal electrode being produced by a platinum metallization being deposited and patterned to form a platinum contact (21) such that the said platinum contact covers at least a portion of the insulating layer of the basic structure of the electrochemical sensor and a portion of the sidewalls of layers arranged laterally with respect to the etched-free region.

7. Method according to one of Claims 1 to 6,
in which, in step b, a basic structure of an ISFET is produced for the electrochemical sensor and the noble metal electrode is provided with a silver/silver chloride contact (23).

8. Method according to one of Claims 1 to 7,
in which, in step c, the protective layer is produced by application and partial removal of an oxide layer (8).

9. Method according to one of Claims 1 to 8,
in which the sensors are integrated with an electronic circuit,
in which, in step a, at least one component of the said circuit is provided on the substrate, and
in which at least steps a, f and g are carried out in the context of a CMOS process or by analogy with a CMOS process.

10. Method according to Claim 9,
in which step g is performed by contact holes being produced by dry etching in the planarization layer (13) or in the planarization layer (13) and in further dielectric layers (14, 15) applied thereto, contact hole fillings for vertical electrically conductive connections (12, 35, 45, 55) being introduced into the said contact holes and at least one metallization plane for interconnects (31, 32, 33, 43, 53) being applied and patterned.

11. Method according to one of Claims 1 to 10,
in which, in steps a and b, a basic structure with an ISFET and a further basic structure with an ISFET, which is provided as reference ISFET of a further structure provided for comparison measurement, are produced,
in which, in step c, the region of the said reference ISFET is also covered with the protective layer,
in which step h is performed by firstly a region provided for the electrochemical sensor and a region provided for the further structure being etched free and the protective layer being removed in both regions, and by a noble metal electrode provided for the further structure being produced by a platinum metallization being deposited and patterned to form a further platinum contact (22) such that the said further platinum contact covers at least the channel region of the reference ISFET and a portion of the sidewalls of layers arranged laterally with respect to the etched-free region.

## Revendications

1. Procédé pour la fabrication d'une combinaison d'un capteur de pression et d'un capteur électrochimique,
dans lequel un capteur de pression micromécanique et un capteur électrochimique sont intégrés sur un substrat, avec les étapes suivantes :
a) des zones électroconductrices (3, 5) sont réalisées dans un substrat (1) ;
b) on fabrique une structure de base pour le capteur électrochimique qui comprend au moins une couche électroisolante ;
c) cette structure de base du capteur électrochimique est recouverte avec une couche protectrice qui laisse libre la zone prévue pour le capteur de pression ;
d) une couche capteur (10) pour le capteur de pression est précipitée et structurée et pourvue d'ouvertures de décapage (29) ;
e) une cavité (11) est creusée par décapage entre la couche capteur et le substrat ;
f) une couche de planarisation (13) à base d'un matériau diélectrique est appliquée sur toute la surface ;
g) des liaisons électroconductrices avec des zones prévues pour le raccordement électrique sont fabriquées ;
h) une zone prévue pour le capteur électrochimique est libérée par décapage, et on précipite et structure au moins une électrode en métal précieux (21) ;
i) une autre couche protectrice (16, 17) prévue pour l'électrode en métal précieux est précipitée ;
j) d'autres couches nécessaires pour l'effet concerné de la conception prévue du capteur électrochimique sont appliquées et structurées ;
soit entre les étapes g et h ou entre les étapes i et j, la couche capteur (10) du capteur de pression est mise à nu vers l'extérieur dans la proportion nécessaire pour le mode de fonctionnement prévu.

2. Procédé selon la revendication 1,
dans lequel la couche capteur du capteur de pression est au moins partiellement mise à nu entre les étapes g et h avec un procédé de décapage à sec.

3. Procédé selon la revendication 1,
dans lequel la couche capteur du capteur de pression est au moins partiellement mise à nu entre les étapes i et j avec un procédé de décapage à sec.

4. Procédé selon l'une quelconque des revendications 1 à 3,
dans lequel la couche électroisolante du capteur électrochimique est fabriquée lors de l'étape b par l'application d'une couche de nitrure (7, 27, 47) et
dans lequel la zone prévue pour le capteur électrochimique est mise à nu dans l'étape h et la couche protectrice est enlevée à cet endroit en effectuant un procédé de décapage par chimie humide.

5. Procédé selon l'une quelconque des revendications 1 à 4,
dans lequel on réalise l'étape i en précipitant une couche d'oxyde (16) par PECFD (plasma enhanced chemical vapor deposition) et ensuite une couche de nitrure (17).

6. Procédé selon l'une quelconque des revendications 1 à 5,
dans lequel on réalise l'étape h en mettant à nu par décapage d'abord d'une zone prévue pour le capteur électrochimique et en enlevant la couche protectrice à cet endroit et en fabriquant ensuite l'électrode en métal précieux, en déposant une métallisation de platine et en la structurant pour faire un contact de platine (21) de sorte que ce contact de platine recouvre au moins une partie de la couche isolante de la structure de base du capteur électrochimique et une partie des flancs de couches disposées sur le côté de la zone mise à nu par décapage.

7. Procédé selon l'une quelconque des revendications 1 à 6,
dans lequel une structure de base d'un ISFET est fabriquée dans l'étape b pour le capteur électrochimique et l'électrode en métal précieux est recouverte d'un contact d'argent/de chlorure d'argent (23).

8. Procédé selon l'une quelconque des revendications 1 à 7,
dans lequel la couche protectrice est fabriquée dans l'étape c par l'application et l'enlèvement partiel d'une couche d'oxyde (8).

9. Procédé selon l'une quelconque des revendications 1 à 8,
dans lequel les capteurs sont intégrés avec un circuit électronique,
dans lequel au moins un composant de ce circuit est prévu sur le substrat dans l'étape a, et
dans lequel au moins les étapes a, f et g sont réalisées dans le cadre d'un procédé CMOS ou par analogie avec un procédé CMOS.

10. Procédé selon la revendication 9,
dans lequel l'étape g est réalisée en fabriquant des trous de contact par décapage à sec dans la couche de planarisation (13) ou dans la couche de planarisation (13) et dans d'autres couches de diélectrique (14, 15) appliquées dessus, en introduisant des charges de trou de contact pour des liaisons (12, 35, 45, 55) verticales et électroconductrices dans ces trous de contact et en appliquant et structurant au moins un plan de métallisation pour des pistes conductrices (31, 32, 33, 43, 53).

11. Procédé selon l'une quelconque des revendications 1 à 10,
dans lequel on fabrique dans les étapes a et b une structure de base avec un ISFET et une autre structure de base avec un ISFET, qui est prévu comme ISFET de référence d'une autre structure prévue pour une mesure de comparaison,
dans lequel, dans l'étape c, également la zone de cet ISFET de référence est recouverte avec la couche protectrice,
dans lequel l'étape h est réalisée en dégageant une zone prévue pour le capteur électrochimique et une zone prévue pour l'autre structure et en enlevant la couche protectrice dans les deux zones et en fabriquant une électrode en métal précieux prévue pour l'autre structure, en déposant une métallisation de platine et en la structurant en un autre contact de platine (22), de telle sorte que cet autre contact de platine couvre au moins la zone de canal du ISFET de référence et une partie des flancs de couches disposées sur le côté de la zone dégagée par décapage.
